(19) Europäisches Patentamt
European Patent Office
Office européen des brevets

(11) **EP 3 333 317 B1**

(12) **FASCICULE DE BREVET EUROPEEN**

(45) Date de publication et mention de la délivrance du brevet:
**08.01.2020 Bulletin 2020/02**

(51) Int Cl.:
*E01B 35/00* (2006.01)    *E01B 35/06* (2006.01)
*E01B 35/08* (2006.01)    *E01B 5/02* (2006.01)
*G01B 21/32* (2006.01)    *B61L 23/04* (2006.01)

(21) Numéro de dépôt: **17205021.3**

(22) Date de dépôt: **01.12.2017**

(54) **SYSTÈME DE GUIDAGE À RAIL DE CHEMIN DE FER**

SCHIENENFÜHRUNGSSYSTEM FÜR EISENBAHN

RAILWAY RAIL GUIDING SYSTEM

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **02.12.2016 FR 1661849**

(43) Date de publication de la demande:
**13.06.2018 Bulletin 2018/24**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **CARMONA, Mikaël**
  **38570 TENCIN (FR)**
• **JOUANET, Laurent**
  **38880 AUTRANS (FR)**
• **VICOL, Thierry**
  **75005 PARIS (FR)**
• **NEVEU, Stéphane**
  **78800 HOUILLES (FR)**

(74) Mandataire: **GIE Innovation Competence Group**
**310, avenue Berthelot**
**69372 Lyon Cedex 08 (FR)**

(56) Documents cités:
EP-A1- 1 521 072    EP-A1- 2 862 778
WO-A2-2007/009132    FR-A1- 3 001 237
FR-A1- 3 012 478    GB-A- 2 372 569

**Description**

L'invention concerne le domaine de la géométrie de la voie ferrée et plus particulièrement le paramètre nivellement base allongée qui caractérise la déformation verticale des files de rail dans le domaine des grandes longueurs d'onde.

Le passage de trains à grande vitesse nécessite une très grande précision de la géométrie des voies. La géométrie d'une voie a un impact direct sur le trafic ferroviaire. En effet, si les paramètres qui définissent cette voie sont en dehors de leur plage nominale, les vitesses de passage des trains doivent être abaissées pour des raisons de sécurité et de confort, ce qui peut perturber l'ensemble du trafic.

Le suivi de la géométrie des voies de chemin de fer en vue d'assurer leur maintenance s'avère ainsi indispensable afin de garantir une vitesse de passage optimale des trains. Toute amélioration du suivi de la géométrie de la voie permet d'améliorer la gestion du trafic sur le réseau ferré et sa maintenance. Le suivi de la géométrie d'une voie comprend notamment la détermination du signal de nivellement en base allongée et la détermination du dressage en base allongée. Un tel suivi géométrique s'avère particulièrement important dans les zones à évolution rapide et les zones de transition entre un remblai et un ouvrage d'art métallique.

Un exemple connu de suivi de la géométrie des voies de chemin de fer est mis en œuvre sur le réseau ferré français par l'intermédiaire d'une rame à grande vitesse nommée IRIS320. Cette rame parcourt chacune des lignes à grande vitesse une fois tous les 15 jours. Cette rame réalise une mesure optique et inertielle de la géométrie de la voie à chacun de ses passages.

L'exploitation d'une telle rame présente plusieurs inconvénients. D'une part, certains paramètres de la géométrie des voies peuvent évoluer à une fréquence bien plus élevée que la fréquence de passage de cette rame. Ainsi, la dilatation thermique d'un ouvrage d'art mixte acier-béton, liée aux variations de température, induit notamment des variations géométriques des voies relativement rapides. Si cette rame mesure une variation géométrique hors norme due à un facteur ponctuel, la vitesse de passage des trains à grande vitesse va devoir être dégradée alors que la géométrie de la voie est potentiellement satisfaisante au moment du passage des trains à grande vitesse exploités commercialement. Comme le passage de la rame IRIS320 doit interférer au minimum avec l'exploitation des trains commerciaux, le suivi géométrique lors de son passage n'est pas forcément représentatif de la géométrie de la voie lors du passage des trains commerciaux. D'autre part, le suivi de la géométrie de la voie n'est pas nécessairement disponible en temps réel.

Du fait du coût d'une telle rame de suivi géométrique et de l'impact que cela pourra avoir sur le trafic, il est difficilement envisageable d'augmenter significativement la fréquence de passage de telles rames de suivi.

Le document EP2862778 décrit un système comportant plusieurs capteurs configurés pour mesurer le changement d'une propriété magnétique d'un rail lors du passage d'un train.

L'invention a pour objet un système de guidage, comprenant :

- un rail de chemin de fer s'étendant selon un axe et comportant :

  - un élément supérieur présentant une face de roulage ;
  - un élément inférieur présentant une face d'appui ;
  - un élément de liaison entre les éléments inférieur et supérieur, au moins un évidement latéral étant ménagé entre les éléments inférieur et supérieur sur le côté de l'élément de liaison ;

caractérisé en ce qu'il comprend en outre ;

- au moins des premier et deuxième capteurs d'attitude fixés au rail par collage en des positions respectives décalées selon ledit axe du rail, lesdits capteurs d'attitude étant logés au moins partiellement dans l'évidement latéral ;
- un circuit de traitement configuré pour récupérer des mesures d'attitude fournies par les premier et deuxième capteurs d'attitude et configuré pour calculer une déformée dudit rail de chemin de fer par rapport audit axe en fonction des mesures d'attitude récupérées.

Selon une ou plusieurs variantes, l'invention pourra comprendre les caractéristiques énumérées précédemment ainsi que les suivantes, ces caractéristiques pouvant être prises seules ou en combinaison :

- chaque capteur d'attitude comprend un accéléromètre configuré pour mesurer un signal continu représentatif de la déformation du rail de chemin de fer.
- Lesdits premiers et deuxièmes capteurs d'attitude comportent chacun :

  - un support en matériau isolant électrique collé au rail ; et

- un boîtier fixé au support.
- Lesdits premiers et deuxièmes capteurs d'attitude comportent chacun un boîtier formant une cage de Faraday.
- Le support comporte deux faces épousant la forme de faces respectives de l'élément inférieur et de l'élément de liaison.
- Chacun desdits premier et deuxième capteurs d'attitude comprend :

    - un accéléromètre configuré pour mesurer une composante d'accélération selon ledit axe ;
    - un circuit de calcul configuré pour calculer l'attitude du capteur d'attitude en fonction de la mesure de l'accéléromètre.

- Ledit accéléromètre respectif des premier et deuxième capteurs d'attitude est un accéléromètre à 3 axes de mesure non colinéaires.
- Lesdits premiers et deuxièmes capteurs d'attitude sont collés à l'élément de liaison et à l'élément inférieur.
- Lesdits premier et deuxième capteurs d'attitude sont distants d'une distance au plus égale à 5 mètres selon l'axe du rail.
- Le système de guidage comprend en outre une connexion filaire entre les premier et deuxième capteurs d'attitude, ladite connexion filaire étant fixée à l'élément inférieur du rail par l'intermédiaire d'une agrafe.
- Un espace est ménagé dans l'évidement latéral entre une face supérieure des capteurs d'attitude et l'élément supérieur.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe transversale schématique d'un exemple de rail de chemin de fer ;
- la figure 2 est une vue de côté d'un exemple de système de guidage selon un exemple de mode de réalisation de l'invention, incluant un rail de chemin de fer et un dispositif de détermination d'attitude du rail dénommé capteur d'attitude ;
- la figure 3 est une vue en coupe transversale du système au niveau d'un capteur d'attitude fixé au rail ;
- la figure 4 est une vue en coupe transversale du système au niveau d'un câble de connexion entre des capteurs d'attitude ;
- les figures 5 et 6 sont des vues en coupe transversale d'un exemple de capteur d'attitude ;
- la figure 7 est une vue de dessus d'un exemple de configuration au niveau d'un appareil de dilatation ; et
- la figure 8 est une représentation schématique d'une déformation verticale d'un rail de chemin de fer.

La détermination de la déformée d'un rail selon l'invention répond à un certain nombre de contraintes :

- une immunité aux conditions météorologiques extérieures ;
- une immunité aux courants élevés traversant les rails ;
- une immunité aux perturbations électromagnétiques importantes lors du passage d'un train ;
- l'absence d'altération de l'intégrité structurelle du rail ;
- la résistance au passage d'un train et/ou au passage d'une rame de maintenance de la voie ;
- ne pas constituer un obstacle au passage d'un train et/ou au passage d'une rame de maintenance de la voie.

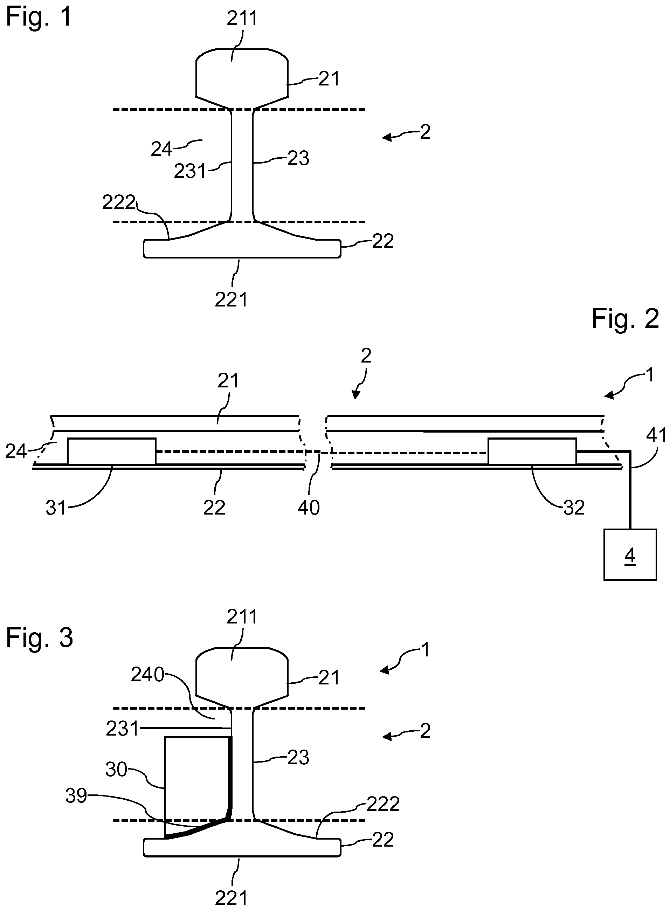

La figure 1 est une vue en coupe transversale schématique d'un exemple de rail de guidage 2 de chemin de fer. Un tel rail 2 est réalisé en acier et est allongé selon un axe, de façon connue en soi. Un tel rail 2 présente typiquement une forme d'extrusion ou présente un rayon de courbure très élevé. Le rail 2 est ici décomposé en trois parties distinctes dans un souci de compréhension, ces trois parties étant illustrées par des éléments séparés par des traits discontinus à la figure 1.

Le rail de guidage 2 comporte :

- un élément supérieur 21 (généralement désigné par le terme champignon), présentant une face supérieure 211 destinée au roulage, sensiblement plate ;
- un élément inférieur 22 (généralement désigné par le terme patin), présentant une face inférieure 221. La face inférieure 221 est destinée à servir de face d'appui et/ou de fixation sur un support non illustré, tel qu'une traverse, l'élément inférieur 22 comporte également des faces supérieures 222, orientées vers l'élément supérieur 21 ;
- un élément de liaison 23 (généralement désigné par le terme âme), reliant l'élément supérieur 21 à l'élément inférieur 22. La largeur du rail de guidage 2 est réduite au niveau de l'élément de liaison 23. L'élément de liaison 23 comporte des faces 231 sensiblement verticales. Au moins un évidement latéral 24 est ménagé entre l'élément supérieur 21 et l'élément inférieur 22, sur le côté de l'élément de liaison 23. Dans l'exemple illustré, le rail de guidage 2 est sensiblement symétrique et comporte des évidements latéraux 24 entre les éléments 21 et 22, de part et d'autre d'un axe vertical passant par l'élément de liaison 23. Le rail de guidage 2 présente ainsi une section transversale ayant globalement la forme d'un I ou la forme de deux C accolés tête-bêche. Un exemple de rail est notamment normalisé sous la référence 60E1. Un rail 2 présente typiquement une longueur de plusieurs dizaines de mètres, par exemple de 100 mètres.

La figure 2 est une vue de côté d'un exemple de système de guidage 1 incluant un rail 2 est un dispositif de détermination d'attitude du rail. Le dispositif de détermination d'attitude comporte ici notamment deux capteurs d'attitude 31 et 32, fixés au rail 2 et décalés selon l'axe longitudinal du rail 2.

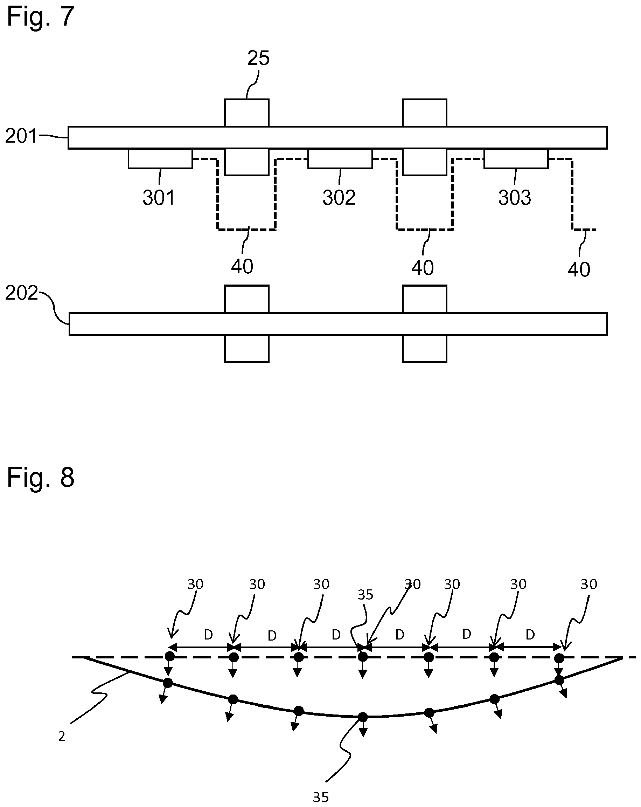

Autrement dit, les deux capteurs d'attitude 31, 32 sont séparés l'un de l'autre par une distance D mesurée le long de l'axe longitudinal du rail 2 (cf. figure 8). Il est à noter qu'un capteur d'attitude 31, 32 peut correspondre à un capteur utilisant au moins deux axes de mesure. De préférence, un capteur d'attitude utilise trois axes de mesure, avec la mesure sur le troisième axe permettant de s'assurer d'une calibration adéquate. Une calibration adéquate est celle pour laquelle la norme N des trois axes est égale à 1 (N = 1 $=\sqrt{x^2 + y^2 + z^2}$). Une telle calibration de chacun des capteurs d'attitude 31, 32 permet alors de s'affranchir des problèmes d'alignement des capteurs d'attitude 31, 32 lors de leur installation sur le rail 2.

Les capteurs d'attitude 31 et 32 sont logés au moins partiellement dans un évidement latéral 24 du rail 2. Ainsi, on limite l'encombrement latéral des capteurs d'attitude 31 et 32, ce qui réduit les risques de contact avec des dispositifs de maintenance du rail 2. Avantageusement, les capteurs d'attitude 31 et 32 sont positionnés dans l'évidement latéral 24 orienté vers la zone médiane définie entre les deux rails formant une voie, l'évidement latéral 24 étant usuellement désigné comme la face intérieure du rail.

Un circuit de traitement 4 est configuré pour récupérer les mesures d'attitude fournies par les capteurs d'attitude 31 et 32. Le circuit de traitement 4 est configuré pour calculer une déformée du rail 2 par rapport à son axe longitudinal. Le circuit de traitement 4 est ici déporté par rapport au rail 2. Le circuit de traitement 4 est par exemple mis en œuvre sous la forme d'un logiciel exécuté sur un ordinateur. Le circuit de traitement 4 est ici connecté au capteur d'attitude 32 par l'intermédiaire d'une connexion filaire 41, comportant un câblage d'alimentation et un câblage de communication. Les capteurs d'attitude, ici en particulier les capteurs d'attitude 31 et 32, sont connectés de proche en proche par l'intermédiaire de liaison filaire 40, comprenant notamment un câblage d'alimentation et un câblage de communication.

Plus précisément, dans le cas d'une plus grande pluralité de capteurs d'attitude 31, 32, par exemple au nombre de 10, chaque capteur d'attitude est relié par liaison filaire 40 au capteur d'attitude suivant, c'est-à-dire à l'un au moins des capteurs d'attitude directement adjacents.

La figure 3 est une vue en coupe transversale du système de guidage 1 au niveau d'un capteur d'attitude 30 fixé au rail 2. Le capteur d'attitude 30 est fixé au rail 2 par l'intermédiaire d'un film de colle 39. Afin d'optimiser la liaison mécanique entre le capteur d'attitude 30 et le rail 2, le film de colle 39 relie le capteur d'attitude 30 à la fois à une face supérieure 222 de l'élément inférieur 22, et à une face verticale 231 de l'élément de liaison 23.

Avantageusement, le capteur d'attitude 30 comporte deux faces épousant respectivement la forme de la face supérieure 222 et la forme de la face verticale 231, afin de favoriser son positionnement par rapport au rail 2 et la résistance mécanique du film de colle 39.

La fixation des capteurs d'attitude 30 par un film de colle 39 permet de ne pas altérer l'intégrité structurelle du rail et permet de garantir un excellent positionnement de chaque capteur d'attitude 30 par rapport au rail 2, malgré les sollicitations mécaniques liées au passage de trains ou de rames de maintenance. Une telle fixation permet de ne pas introduire d'incertitudes qui pourraient être liées à un mouvement relatif entre un capteur d'attitude 30 et le rail 2.

De préférence, le film de colle 39 est appliqué de manière à former une couche continue entre le capteur d'attitude 30 et le rail 2, afin d'éviter toute infiltration d'humidité entre le capteur 30, 31, 32 et le rail 2, qui pourrait engendrer une dégradation du rail 2 et fausser les mesures acquises par le capteur d'attitude 30, 31 ou 32.

Par un choix approprié du film de colle 39, on peut accroître la rigidité mécanique et la permittivité diélectrique entre le rail 2 et l'intérieur du boîtier 320 (détaillé par la suite), en choisissant une colle isolante électriquement.

Le film de colle 39 peut par exemple être réalisé avec une colle époxyde commercialisée sous la référence Loctite EA 9466 par la société Henkel, ou une colle époxyde commercialisée sous la référence DP8405NS par la société 3M. Une telle colle est par exemple choisie pour ses propriétés de résistance mécanique à l'arrachement, au pelage et au cisaillement, d'isolation électrique, de résistance à un grand nombre de produits chimiques, de résistance dans le temps et de résistance aux vibrations. Des tests d'arrachement et de tenue en température ont démontré les propriétés satisfaisantes des films de colle 39 choisis. Le film de colle 39 est avantageusement appliqué après meulage et dégraissage des surfaces 231 et 222.

Par ailleurs, un espace 240 est ménagé dans un évidement latéral 24, entre une face supérieure du capteur d'attitude 30 et l'élément supérieur 21. Cet espace est destiné à permettre le passage d'appareillage de maintenance des rails (par exemple une trame de bourrage) pinçant l'élément supérieur 21, sans risque d'altération du capteur d'attitude 30.

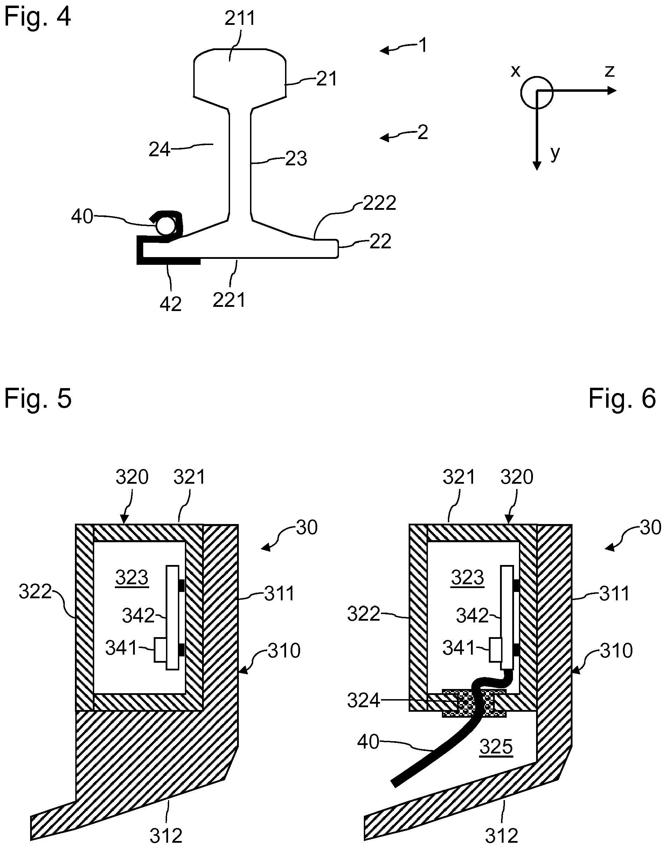

La figure 4 est une vue en coupe transversale du système 1 au niveau d'une fixation d'une connexion filaire 40 au rail 2. La connexion filaire 40 s'étend le long d'une face supérieure 222 entre deux capteurs d'attitude adjacents. La connexion filaire 40 est avantageusement fixée à l'élément inférieur 22 par l'intermédiaire d'une agrafe 42 solidaire de l'élément inférieur 22. Pour disposer d'une précision optimale sur la détermination de la déformée du rail, les capteurs d'attitude adjacents sont avantageusement distants d'une distance D d'au plus 5 mètres, de préférence d'au plus 3 mètres.

Avantageusement, dans les zones à évolution rapide, par exemple dans un appareil de dilatation, et les zones de transition, par exemple entre un remblai et un ouvrage d'art, un capteur d'attitude 30, 31 ou 32 est disposé entre chaque traverse du rail 2, la traverse étant la partie solidarisant deux rails 2 parallèles formant le chemin de fer. Ainsi la distance D séparant deux capteurs d'attitude 30, 31, 32 directement adjacents le long d'un même rail 2, est sensiblement égale à 55 centimètres. Par sensiblement, il est entendu une incertitude de plus ou moins 10%. La distance D typique peut être modifiée si l'espacement standard entre des traverses adjacentes est différent, par exemple quand il dépend des régions d'installation ou de l'usage de la voie ferrée.

Les figures 5 et 6 sont des vues en coupe d'un exemple de structure de capteur d'attitude 30, en deux emplacements distincts axialement. Le capteur d'attitude 30 comporte un support 310 destiné à être fixé au rail 2 par collage. Le support 310 comporte ainsi une face 311 destinée à venir épouser une face verticale 231 de l'élément de liaison 23, et une face 312 destinée à venir épouser une face supérieure 222 de l'élément inférieur 22. Le support 310 est formé en matériau isolant électriquement, par exemple en PTFE. Le support 310 permet ainsi de rendre le capteur d'attitude 30 immunisé contre les boucles de courant traversant le rail 2 lors du passage d'un train à alimentation par caténaire. En effet, cela permet d'éviter de perturber les mesures acquises par les capteurs d'attitude 30, 31, 32 et permet d'éviter de détériorer les capteurs d'attitudes qu'ils soient en phase de mesure ou en phase de repos.

Le capteur d'attitude 30 comporte en outre un boîtier 320. Le boîtier 320 comporte une coque 321 et un couvercle 322 délimitant un logement 323. Le logement 323 est isolé des intempéries afin de réaliser des mesures dans des conditions climatiques difficiles, incluant des variations de la température, une présence d'humidité, de vent et de poussière, ou de pluie ou de neige. Le boîtier 320 est fixé au support 310 par tous moyens appropriés, par exemple par collage. Le boîtier 320 est avantageusement configuré pour former une cage de Faraday autour du logement 323. Le logement 323 est ainsi préservé des fortes perturbations électromagnétiques provenant de sources d'alimentation ou de transport d'énergie lors du passage d'un train. Le boîtier 320 (notamment sa coque 321 et son couvercle 322) peut par exemple être formé dans un plastique (par exemple du PA) chargé de particules métalliques, ou revêtu de parois métalliques par exemple obtenu par galvanoplastie. Avantageusement, le boîtier 320 est formé en métal.

Le capteur d'attitude 30, 31, 32 comprend un circuit électronique 342 muni de moyens de traitement, et un accéléromètre 341 fixé par exemple sur le substrat du circuit électronique 342. Le circuit électronique 342 et l'accéléromètre 341 sont logés à l'intérieur du logement 323. Le circuit électronique 342 et/ou l'accéléromètre 341 peuvent être enrobés dans une résine en vue d'améliorer leur résistance aux agressions extérieures. Le matériau enrobant est par exemple du polyuréthane ou de l'epoxy, qui protège des agressions chimiques, physico-chimiques, qui favorise l'absorption d'éventuels chocs et contraintes. Le circuit électronique 342 peut être fixé par collage au boîtier 320.

Sur la vue en coupe de la figure 5, le support 310 comporte une forme pleine supportant le boîtier 320. Sur la vue en coupe de la figure 6, le support 310 est illustré au niveau d'un évidement 325 destiné à laisser passer la connexion filaire 40. Le boîtier 320 comporte deux ouvertures au niveau d'une face inférieure. Ces ouvertures débouchent sur l'évidement 325 et sont traversées par des connexions filaires 40. Les connexions filaires 40 ont pour rôle d'assurer l'alimentation du circuit électronique 342 et de l'accéléromètre 341, ainsi que d'assurer la communication avec les capteurs d'attitude 30, 31, 32 adjacents. L'utilisation de connexions filaires 40 permet d'améliorer l'immunité des communications aux perturbations électromagnétiques. De plus, l'avantage de l'utilisation des connexions filaires 40 par rapport à une connexion sans fil est que les mesures réalisées par les capteurs d'attitude 30, 31, 32 à un instant donné sont mieux synchronisées.

Les circuits électroniques 342 peuvent être configurés pour assurer une répétition d'alimentation vers un capteur d'attitude 30, 31, 32 adjacent.

Les ouvertures du boîtier 320 sont étanchéifiées par l'intermédiaire de presse étoupes 324. Avantageusement, ces presse étoupes 324 incluent une reprise de blindage pour ne pas altérer une cage de Faraday formée par le boîtier 320.

Chaque capteur d'attitude 30, 31, 32 comprendra avantageusement un accéléromètre 341 à trois axes. De préférence, l'accéléromètre est de type masse-ressort ou de type capacitif. Avantageusement, l'accéléromètre est configuré de manière à mesurer un signal continu représentatif de la déformation du rail 2.

L'accéléromètre 341 peut par exemple être l'accéléromètre commercialisé par la société Safran sous la référence MS9001. Chaque capteur d'attitude 30 peut également comprendre en outre un capteur de température et/ou un magnétomètre multi axes.

Le système de guidage 1 peut par exemple être utilisé pour déterminer un nivellement en base allongée. Le nivellement en base allongée correspond à une version filtrée spatialement du nivellement moyen défini comme la moyenne du nivellement de chaque file de rail de la voie étudiée. Le nivellement d'une file de rail correspond à la déformée verticale de cette file. Par conséquent, l'instrumentation des deux files de rails qui composent une voie par un système qui mesure la déformée verticale de ces files permet une estimation du nivellement en base allongée.

Le système de guidage 1 comprend plusieurs capteurs d'attitude 30 distants les uns des autres selon la direction longitudinale du rail 2. L'attitude d'un capteur est définie par la rotation qui permet de passer du système d'axe du capteur à un système d'axe de référence. L'attitude peut être paramétrée par trois angles : l'inclinaison, le roulis et le lacet. Il existe plusieurs façons de définir ces trois angles. Lorsqu'un capteur d'attitude 30 est fixé au rail 2 de sorte qu'un de ses axes soit parallèle à l'axe longitudinal du rail 2, alors :

- l'inclinaison du capteur d'attitude 30 correspond alors à l'angle du rail 2 au point de mesure par rapport à un axe longitudinal d'un référentiel fixe ;
- le roulis correspond à l'angle de la rotation autour de l'axe dirigé par la tangente au rail 2 ;
- le lacet correspond à l'angle de la rotation autour d'un axe vertical.

Le système 1 comprend ici notamment des capteurs d'attitude (notamment 31 et 32) répartis sur la longueur du rail 2. Les capteurs d'attitude 31 et 32 sont fixés au rail 2, ce qui permet de lier leur attitude à la déformée du système 1. L'instrumentation avec les capteurs d'attitude 31 et 32 selon l'invention est typiquement destinée à détecter une déformation de 1mm sur 10 mètres de longueur du rail 2, selon les axes x, y et z (cf. figure 4).

Les capteurs d'attitude 31 à 32 comprennent par exemple chacun un accéléromètre configuré pour mesurer au moins une composante d'accélération selon l'axe longitudinal du rail 2, et un circuit électronique 342 configuré pour calculer l'attitude du capteur en fonction de la mesure de son accéléromètre 341, de façon connue en soi.

Les accéléromètres 341 des capteurs d'attitude 31 et 32 sont par exemple formés de composants MEMS. De tels capteurs MEMS ont démontré leur stabilité en température et dans le temps, et peuvent actuellement présenter des résolutions d'accélération meilleures que $0,1 \ 10^{-3}$ g.

Comme détaillé par la suite, le circuit de traitement 4 récupère les mesures d'attitude fournies (par exemple les données de mesure brutes des capteurs d'attitude) par chaque capteur d'attitude 31 et 32 et calcule une déformée du rail 2 en fonction de ces mesures d'attitude.

Plus précisément, c'est l'organisation en réseau des différents capteurs d'attitude 30, 31, 32 qui permet de mesurer la déformée. En effet, comme cela sera décrit en relation avec la figure 8, un capteur d'attitude 30, 31, 32 situé au point critique de la déformation du rail 2 ne relèvera pas nécessairement à lui seul la déformée du rail 2. En revanche, les capteurs d'attitude adjacents 30, 31, 32 mesureront le déplacement de leurs axes par rapport à leur état initial. Il est à noter que l'état initial des capteurs d'attitude 30, 31, 32 est programmé lors de leur calibration, la calibration étant réalisée avantageusement le jour de leur installation sur le rail 2. De manière préférentielle, l'installation des capteurs d'attitude 30, 31, 32 se fait sur des rails 2 sortis d'usine.

Le circuit de traitement 4 est configuré pour récupérer les mesures d'attitude des différents capteurs d'attitude 31 et 32 notamment. Le circuit de traitement 4 est configuré pour calculer la déformée globale ou la courbure du rail 2, en fonction des différentes mesures d'attitude récupérées. Le circuit de traitement 4 peut réaliser un filtrage temporel des données brutes fournies par les capteurs d'attitude 30, 31, 32, pour améliorer le rapport signal-à-bruit. Un tel filtrage temporel est justifié par l'hypothèse qu'une file de rail est statique sur une fenêtre de quelques minutes. Une fréquence d'échantillonnage de 1 Hz peut par exemple être envisagée.

Lors de la déformation du rail 2 en flexion ou en torsion, l'attitude des différents capteurs d'attitude est modifiée, du fait de leur couplage mécanique avec le rail 2. Le circuit de traitement 4 est programmé pour évaluer l'attitude en tout point du rail 2, à partir des mesures fournies par les capteurs d'attitude. Une telle évaluation est par exemple réalisée au moyen de méthodes d'interpolation, telles que l'interpolation par splines cubiques. Des exemples de méthodes d'interpolation et de reconstruction sont par exemple décrits dans le chapitre 1 de la thèse de doctorat de N. Sprynski, « Reconstruction de courbes et surfaces à partir de données tangentielles », Université Joseph Fourier, Grenoble, France, 2007.

De même, lors de la déformation du rail 2 en torsion, l'attitude des différents capteurs est modifiée, du fait de leur couplage mécanique au rail 2.

Un exemple pour calculer la déformée du rail 2 à partir des mesures d'attitude/inclinaison des différents capteurs d'attitude peut être le suivant. On suppose que les capteurs d'attitude sont des capteurs 3 axes, effectuant une mesure m(t,s) exprimée en g, avec t l'instant de mesure et s l'abscisse curviligne d'un capteur le long du rail 2. Avec $\varphi(t,s)$ l'inclinaison et $\eta(t,s)$ son roulis introduit plus haut :

$$m(t,s) = \begin{bmatrix} \cos(\varphi(t,s)) \\ -\sin\bigl(\varphi(t,s)\bigr) * \sin(\eta(t,s)) \\ -\sin(\varphi(t,s)) * \cos(\eta(t,s)) \end{bmatrix}$$

Les capteurs d'attitude à accéléromètres à 3 axes dans le rail 2, fournissent un échantillonnage spatial de l'inclinaison/attitude sur toute la longueur pourvue de ces capteurs, en fonction de l'abscisse curviligne le long de ce rail 2. En utilisant un modèle d'interpolation ou d'approximation à partir des attitudes discrètes fournies par les capteurs d'attitude fixés au rail 2, on peut extrapoler une fonction continue représentative de l'inclinaison/attitude en fonction de l'abscisse curviligne s le long du rail 2. La déformée verticale du rail 2 en tout point est définie en utilisant cette fonction dans la relation suivante :

$$Def(t,s) = \begin{bmatrix} x(t,s) \\ y(t,s) \end{bmatrix} = Def(t,s0) + \int_{u=s0}^{s} \begin{bmatrix} \cos(\varphi(t,u)) \\ \sin(\varphi(t,u)) \end{bmatrix} du$$

Dans le repère $\bigl(O, \vec{x}, \vec{y}\bigr)$ où $y$ est colinéaire à la gravité et $\vec{x}$ est tel que le plan (O, x, y) contient la courbe représentative du rail.

En partant de l'hypothèse que le point d'abscisse curviligne s0 reste fixe dans le temps, alors Def(t,s0)=0. La déformée globale est alors complètement déterminée par l'intermédiaire de la fonction continue d'inclinaison.

Dans le cas où le capteur d'attitude 30, 31, 32 comprend un magnétomètre, il est alors possible de mesurer le déplacement latéral du rail 2, c'est-à-dire une rotation autour de l'axe vertical dénommée lacet. Toutefois, compte tenu de la présence du boîtier 320 formant éventuellement une cage de Faraday, il est nécessaire de s'assurer que celle-ci soit perméable au champ magnétique et imperméable au champ électrique.

Ainsi, on comprend que selon l'invention, les capteurs d'attitude 30, 31, 32 permettent de détecter et de mesurer des déformations en torsion et en flexion, à l'aide d'accéléromètres tri-axes et qu'en variante de réalisation, ces capteurs d'attitude 30, 31, 32 sont également capables de détecter et de mesurer des déformations en rotation lorsqu'ils sont équipés de magnétomètres.

La précision du calcul de la déformée globale du rail 2 dépend notamment des paramètres suivants du capteur d'attitude 30, 31, 32 :

- la technologie du capteur d'attitude 30, 31, 32, influe sur les paramètres suivants : sa résolution (plus petite variation d'accélération qui puisse être détectée), son écart-type de bruit de mesure (lié à la résolution dans certaines technologies), sa stabilité en température (dérive en mg/°K) et sa stabilité dans le temps (dérive en mg/an). La notion de stabilité dans le temps intègre les dérives de sensibilité et de calibrage du capteur d'attitude mais également les dérives des angles entre chaque axe de mesure pour un accéléromètre à 3 axes lorsqu'il est composé de 3 accéléromètres monoaxes perpendiculaires ;
- la densité et la répartition spatiale des capteurs d'attitude le long du rail 2. La reconstruction est d'autant plus précise que le nombre de nœuds de mesure est élevé et que leur répartition est adéquate (cf. figure 8). Pour un rail 2 de structure géométrique sensiblement homogène sur sa longueur, une répartition des capteurs d'attitude uniforme selon son axe longitudinal est optimale. Pour une telle structure, avec les capteurs d'attitude testés, une quantité de 3 capteurs d'attitude par 10 mètres de longueur de rail s'avère suffisante, et un capteur d'attitude tous les mètres est optimal. Il est à noter que pour les zones à évolution rapide et les zones de transition entre un remblai et un ouvrage d'art métallique, un capteur tous les 55 centimètres est optimal ou espacé d'une distance comparable au pas de répétition des traverses à 10% près ;
- les incertitudes sur le montage des capteurs d'attitude 30, 31, 32. Un accéléromètre 3 axes permet d'estimer l'inclinaison que son propre repère forme avec la direction d'orientation du rail 2. La déformée globale calculée est d'autant plus précise que l'axe du repère qui définit l'inclinaison de chaque accéléromètre d'un capteur d'attitude est tangent à la déformée globale à calculer ;
- les incertitudes sur les abscisses curvilignes des capteurs d'attitude 30, 31, 32. L'incertitude sur l'abscisse d'un capteur d'attitude 30, 31, 32 influe sur la performance de reconstruction ;
- le modèle d'interpolation/d'approximation de la fonction continue d'inclinaison/attitude. Pour un rail 2 dont la fibre neutre est sensiblement rectiligne, la fonction d'inclinaison est lisse et peut être approximée par l'intermédiaire d'une spline cubique. D'autres modèles d'interpolation sont connus en soi de l'homme du métier pour définir une fonction d'inclinaison à partir de mesures ponctuelles.

Avec un système de guidage 1 selon l'invention, la géométrie du rail 2 peut être suivie à une fréquence assez élevée, par exemple toutes les 15 minutes, voire toutes les 1 minute, sans affecter la circulation des trains sur les voies. Avec une telle fréquence temporelle ou cadence, il est notamment possible de limiter au strict minimum la période durant laquelle la vitesse de circulation des trains est réduite du fait que le nivellement base allongée dépasse un certain seuil.

On peut mettre en œuvre une étape de calibration du système 1. À cet effet, on peut par exemple faire parcourir le rail 2 par un capteur d'attitude mobile de référence. Les mesures de ce capteur d'attitude de référence permettent par exemple d'aligner le repère de chaque capteur d'attitude fixé au rail 2, en fonction des mesures réalisées par le capteur d'attitude mobile. La calibration peut également inclure la localisation précise des différents capteurs d'attitude 30 selon l'axe longitudinal du rail 2.

L'invention s'avère particulièrement avantageuse pour une zone de transition entre un remblai et un ouvrage d'art, particulièrement soumise à des contraintes mécaniques.

La figure 7 illustre en outre en vue de dessus schématique, une application particulière à un demi appareil de dilatation à une extrémité d'une zone de transition. Le demi-appareil de dilatation comporte deux rails parallèles 201 et 202. Seuls les capteurs d'attitude 301 à 303 du rail 201 ont été illustrés. Les rails 201 et 202 sont fixés à des traverses par l'intermédiaire d'étriers 25. Ces étriers 25 gênent le passage des connexions filaires 40. Par conséquent, une partie des connexions filaires 40 est déportée vers la zone médiane entre les rails 201 et 202, au niveau de chaque étrier 25.

La figure 8 illustre de manière schématique une déformation subie par un rail 2 dans une zone à évolution rapide, avec un état initial représenté en trait pointillé et un état déformé représenté en trait plein. L'état initial se situe au niveau du sol, tandis que l'état déformé se situe en dessous du niveau du sol. Des capteurs d'attitudes 30 ont été disposés tous les cinquante cinq centimètres (D) le long du rail 2 dans cette zone à évolution rapide. Afin de mieux comprendre l'importance de l'utilisation en réseau des capteurs d'attitude 30, un de leurs axes a été représenté.

Dans ce cas particulier, le capteur d'attitude 30 situé au point critique de la déformation verticale du rail 2, appelé capteur d'attitude critique 35 ne détectera pas et ne mesurera pas de déformation, étant donné que l'orientation de ses axes reste inchangée par rapport à l'état initial. En revanche, les capteurs d'attitude adjacents 30 présentent au moins un de leurs axes orientés de manière différente par rapport à l'état initial, ce qui leur permettra de mesurer de manière quantitative la déformation subie par le rail 2. Une fois ces données récupérées par le circuit de traitement 4, le calcul de la déformée sur cette zone à évolution rapide est réalisé.

## Revendications

**1.** Système de guidage (1), comprenant :

- un rail de chemin de fer (2) s'étendant selon un axe et comportant :

- un élément supérieur (21) présentant une face de roulage (211) ;
- un élément inférieur (22) présentant une face d'appui (221) ;
- un élément de liaison (23) entre les éléments inférieur et supérieur, au moins un évidement latéral (24) étant ménagé entre les éléments inférieur et supérieur sur le côté de l'élément de liaison ;
le système de guidage comprenant en outre ;

- au moins des premier et deuxième capteurs d'attitude (31,32) fixés au rail par collage (39) en des positions respectives décalées selon ledit axe du rail, lesdits capteurs d'attitude étant logés au moins partiellement dans l'évidement latéral (24);
- un circuit de traitement (4) configuré pour récupérer des mesures d'attitude fournies par les premier et deuxième capteurs d'attitude (31,32) et configuré pour calculer une déformée dudit rail de chemin de fer (2) par rapport audit axe en fonction des mesures d'attitude récupérées.

**2.** Système de guidage (1) selon la revendication 1, dans lequel chaque capteur d'attitude (30, 31, 32) comprend un accéléromètre configuré pour mesurer un signal continu représentatif de la déformation du rail de chemin de fer.

**3.** Système de guidage (1) selon la revendication 1 ou 2, dans lequel lesdits premiers et deuxièmes capteurs d'attitude (31,32) comportent chacun :

- un support (310) en matériau isolant collé au rail (2) ; et
- un boîtier (320) fixé au support.

**4.** Système de guidage (1) selon les revendications 2 et 3, **caractérisé en ce que** lesdits premiers et deuxièmes capteurs d'attitude (31,32) comportent chacun un boîtier (320) formant une cage de Faraday et logeant un accéléromètre d'un capteur d'attitude respectif.

5. Système de guidage (1) selon la revendication 4, dans lequel le support (310) comporte deux faces épousant la forme de faces respectives de l'élément inférieur (22) et de l'élément de liaison (23).

6. Système de guidage (1) selon l'une quelconque des revendications 1 à 5, dans lequel chacun desdits premier et deuxième capteurs d'attitude (31,32) comprend :

   - un accéléromètre (341) configuré pour mesurer une composante d'accélération selon ledit axe ;
   - un circuit de calcul (342) configuré pour calculer l'attitude du capteur d'attitude (31,32) en fonction de la mesure de l'accéléromètre (341).

7. Système de guidage (1) selon la revendication 6, dans lequel ledit accéléromètre respectif des premier et deuxième capteurs d'attitude (31,32) est un accéléromètre à 3 axes de mesure non colinéaires.

8. Système de guidage (1) selon l'une quelconque des revendications précédentes, dans lequel lesdits premiers et deuxièmes capteurs d'attitude (31,32) sont collés à l'élément de liaison (23) et à l'élément inférieur (22).

9. Système de guidage (1) selon l'une quelconque des revendications précédentes, dans lequel lesdits premier et deuxième capteurs d'attitude (31,32) sont distants d'une distance au plus égale à 5 mètres selon l'axe du rail (2).

10. Système de guidage (1) selon l'une quelconque des revendications précédentes, comprenant en outre une connexion filaire (40) entre les premier et deuxième capteurs d'attitude (31,32), ladite connexion filaire étant fixée à l'élément inférieur (22) du rail (2) par l'intermédiaire d'une agrafe.

11. Système de guidage (1) selon l'une quelconque des revendications précédentes, dans lequel un espace (240) est ménagé dans l'évidement latéral (24) entre une face supérieure des capteurs d'attitude (31,32) et l'élément supérieur (21).

## Patentansprüche

1. Führungssystem (1), umfassend:

   - eine Eisenbahnschiene (2), die sich entlang einer Achse erstreckt und umfasst:

     - ein oberes Element (21), das eine Lauffläche (211) aufweist;
     - ein unteres Element (22), das eine Auflagefläche (221) aufweist;
     - ein Verbindungselement (23) zwischen dem unteren und dem oberen Element, wobei mindestens eine seitliche Aussparung (24) zwischen dem unteren und dem oberen Element an der Seite des Verbindungselements ausgebildet ist;

   wobei das Führungssystem ferner umfasst:

     - mindestens erste und zweite Lagesensoren (31,32), die an der Schiene durch Kleben (39) an jeweiligen entlang der Achse der Schiene versetzten Positionen befestigt sind, wobei die Lagesensoren zumindest teilweise in der seitlichen Aussparung (24) aufgenommen sind;
     - eine Verarbeitungsschaltung (4), die darauf ausgelegt ist, die von den ersten und zweiten Lagesensoren (31,32) abgegebenen Lagemessungen abzurufen, und darauf ausgelegt ist, eine Verformung der Eisenbahnschiene (2) in Bezug auf die Achse in Abhängigkeit von den abgerufenen Lagemessungen zu berechnen.

2. Führungssystem (1) nach Anspruch 1, bei dem jeder Lagesensor (30, 31, 32) einen Beschleunigungsmesser umfasst, der darauf ausgelegt ist, ein Dauersignal zu messen, das für die Deformation der Eisenbahnschiene repräsentativ ist.

3. Führungssystem (1) nach Anspruch 1 oder 2, wobei die ersten und zweiten Lagesensoren (31,32) jeweils umfassen:

- einen Träger (310) aus isolierendem Material, der an die Schiene (2) geklebt ist, und
- ein Gehäuse (320), das an dem Träger befestigt ist.

**4.** Führungssystem (1) nach den Ansprüchen 2 und 3, **dadurch gekennzeichnet, dass** die ersten und zweiten Lagesensoren (31,32) jeweils ein Gehäuse (320) umfassen, das einen Faradayschen Käfig bildet und einen Beschleunigungsmesser eines jeweiligen Lagesensors aufnimmt.

**5.** Führungssystem (1) nach Anspruch 4, bei dem der Träger (310) zwei Flächen umfasst, die an die Form der jeweiligen Flächen des unteren Elements (22) und des Verbindungselements (23) angepasst sind.

**6.** Führungssystem (1) nach einem der Ansprüche 1 bis 5, bei dem jeder der ersten und zweiten Lagesensoren (31,32) umfasst:

- einen Beschleunigungsmesser (341), der darauf ausgelegt ist, eine Beschleunigungskomponente entlang der Achse zu messen;
- eine Rechenschaltung (342), die darauf ausgelegt ist, die Lage des Lagesensors (31,32) in Abhängigkeit von der Messung des Beschleunigungsmessers (341) zu berechnen.

**7.** Führungssystem (1) nach Anspruch 6, bei dem der jeweilige Beschleunigungsmesser der ersten und zweiten Lagesensoren (31,32) ein Beschleunigungsmesser mit 3 nicht kollinearen Messachsen ist.

**8.** Führungssystem (1) nach einem der vorhergehenden Ansprüche, bei dem die ersten und zweiten Lagesensoren (31,32) an das Verbindungselement (23) und an das untere Element (22) geklebt sind.

**9.** Führungssystem (1) nach einem der vorhergehenden Ansprüche, bei dem die ersten und zweiten Lagesensoren (31,32) entlang der Achse der Schiene (2) höchstens 5 Meter voneinander entfernt sind.

**10.** Führungssystem (1) nach einem der vorhergehenden Ansprüche, umfassend ferner eine Kabelverbindung (40) zwischen den ersten und zweiten Lagesensoren (31,32), wobei die Kabelverbindung am unteren Element (22) der Schiene (2) mittels einer Klammer befestigt ist.

**11.** Führungssystem (1) nach einem der vorhergehenden Ansprüche, bei dem ein Raum (240) in der seitlichen Aussparung (24) zwischen einer Oberseite der Lagesensoren (31,32) und dem oberen Element (21) ausgebildet ist.

**Claims**

**1.** Guide system (1) comprising:

- a railway rail (2) extending along an axis and having:

- an upper element (21) having a rolling surface (211);
- a lower element (22) having a bearing surface (221);
- a connecting element (23) between the lower and upper elements, at least one lateral recess (24) being provided between the lower and upper elements on the side of the connecting element;

the guide system also comprising:

- at least first and second attitude sensors (31, 32) fastened to the rail by an adhesive bond (39) in offset respective positions along said axis of the rail, said attitude sensors being housed at least partially in the lateral recess (24);
- a processing circuit (4) configured to collect attitude measurements provided by the first and second attitude sensors (31, 32) and configured to calculate a deformed shape of said railway rail (2) with respect to said axis depending on the attitude measurements collected.

**2.** Guide system (1) according to Claim 1, wherein each attitude sensor (30, 31, 32) comprises an accelerometer configured to measure a continuous signal representative of the deformation of the railway rail.

3. Guide system (1) according to Claim 1 or 2, wherein said first and second attitude sensors (31, 32) each have:

   - a support (310) made of insulating material adhesively bonded to the rail (2); and
   - a casing (320) fastened to the support.

4. Guide system (1) according to Claims 2 and 3, **characterized in that** said first and second attitude sensors (31, 32) each have a casing (320) that forms a Faraday cage and houses an accelerator of a respective attitude sensor.

5. Guide system (1) according to Claim 4, wherein the support (310) has two faces that closely follow the shape of respective faces of the lower element (22) and of the connecting element (23).

6. Guide system (1) according to any one of Claims 1 to 5, wherein each of said first and second attitude sensors (31, 32) comprises:

   - an accelerometer (341) configured to measure an acceleration component along said axis;
   - a calculation circuit (342) configured to calculate the attitude of the attitude sensor (31, 32) depending on the measurement of the accelerometer (341).

7. Guide system (1) according to Claim 6, wherein said respective accelerometer of the first and second attitude sensors (31, 32) is an accelerometer with 3 non-colinear measurement axes.

8. Guide system (1) according to any one of the preceding claims, wherein said first and second attitude sensors (31, 32) are adhesively bonded to the connecting element (23) and to the lower element (22).

9. Guide system (1) according to any one of the preceding claims, wherein said first and second attitude sensors (31, 32) are spaced apart along the axis of the rail (2) by a distance at most equal to 5 metres.

10. Guide system (1) according to any one of the preceding claims, also comprising a wire connection (40) between the first and second attitude sensors (31, 32), said wire connection being fastened to the lower element (22) of the rail (2) via a clip.

11. Guide system (1) according to any one of the preceding claims, wherein a space (240) is provided in the lateral recess (24) between an upper face of the attitude sensors (31, 32) and the upper element (21).

Fig. 1

Fig. 2

Fig. 3

Fig. 4

211

21

1

2

x

z

y

24

23

40

222

22

42

221

Fig. 5

Fig. 6

320  321

30

322

323

342

341

311

310

312

321  320

30

322

323

342

341

311

310

324

40

325

312

Fig. 7

Fig. 8

**RÉFÉRENCES CITÉES DANS LA DESCRIPTION**

**Documents brevets cités dans la description**

- EP 2862778 A

**Littérature non-brevet citée dans la description**

- **N. SPRYNSKI.** Reconstruction de courbes et surfaces à partir de données tangentielles. Université Joseph Fourier, 2007